Europäisches Patentamt

European Patent Office

Office européen des brevets

(19)

(11) Veröffentlichungsnummer : **0 180 940**
**B1**

(12)

# EUROPÄISCHE PATENTSCHRIFT

(45) Veröffentlichungstag der Patentschrift :
**13.04.88**

(21) Anmeldenummer : **85113976.6**

(22) Anmeldetag : **04.11.85**

(51) Int. Cl.⁴ : **B 23 D 63/14**

(54) **Vorschubeinrichtung zum intermittierenden Drehen eines Kreissägeblattes grosser Zahnteilung.**

(30) Priorität : **06.11.84 DE 3440500**

(43) Veröffentlichungstag der Anmeldung :
**14.05.86 Patentblatt 86/20**

(45) Bekanntmachung des Hinweises auf die Patenterteilung : **13.04.88 Patentblatt 88/15**

(84) Benannte Vertragsstaaten :
**AT BE CH FR GB IT LI LU NL SE**

(56) Entgegenhaltungen :
**DE-A- 1 502 975**
**DE-B- 1 050 151**
**DE-B- 1 079 423**
**DE-C- 820 994**

(73) Patentinhaber : **Vollmer Werke Maschinenfabrik GmbH**
**Wilhelmstrasse 20**
**D-7950 Biberach/Riss 1 (DE)**

(72) Erfinder : **Beck, Ernst**
**Wennedacher Strasse 16**
**D-7951 Maselheim (DE)**
Erfinder : **Lenard, Peter**
**Hermann-Volz-Strasse 31**
**D-7950 Biberach/Riss 1 (DE)**
Erfinder : **Hutzel, Hans**
**Biberacher Strasse 70**
**D-7951 Ummendorf (DE)**

(74) Vertreter : **Wuesthoff, Franz, Dr.-Ing. et al**
**Patentanwälte Wuesthoff -v. Pechmann-Behrens-Goetz Schweigerstrasse 2**
**D-8000 München 90 (DE)**

## Beschreibung

Die Erfindung betrifft eine Vorschubeinrichtung zum intermittierenden Drehen eines Kreissägeblattes großer Zahnteilung mit
- einem Aufsteckdorn für das Sägeblatt,
- einer Hauptklinke, die hubweise vor- und zurückbewegbar und dazu ausgebildet ist, bei jedem zweiten Vorwärtshub die Zahnbrust eines Zahnes des Sägeblattes in eine Bearbeitungsstellung zu schieben,
- einer Hilfsklinke, die hinter der Hauptklinke angeordnet, gemeinsam mit ihr vor- und zurückbewegbar und dazu ausgebildet ist, bei jedem auf das Instellungbringen eines Zahnes folgenden Rückhub hinter der Zahnbrust des nächsten Zahnes einzurasten und sie beim nächstfolgenden Vorwärtshub in eine Zwischenstellung zu bringen, in der die Hauptklinke beim darauffolgenden Rückhub hinter dieser Zahnbrust einrasten kann, und
- einem Anschlag, der die Einrastbewegung der Hilfsklinke begrenzt.

Bei einer bekannten Vorschubeinrichtung dieser Gattung (DE-C 689 015) ist die Hilfsklinke schwenkbar an einem Schieber gelagert, der an der Hauptklinke längsverschiebbar geführt und mittels einer Klemmschraube festklemmbar ist. Die Hilfsklinke ist durch eine Feder in Richtung ihrer Einrastbewegung belastet ; der Anschlag, der diese Einrastbewegung begrenzt, ist von einer in den Schieber eingeschraubten Stellschraube gebildet. Bei jeder bestimmten Einstellung dieser Stellschraube bewegt sich die Hilfsklinke während der von ihr bewirkten Vorschubbewegung des Sägeblattes auf einer Schleppkurve, die von der Bahn der gleichzeitigen Bewegung der Hauptklinke abhängt. Es ist schwierig, in vielen Fällen sogar unmöglich, diese Bewegungsbahn der Hauptklinke und die Einstellung des Anschlags für die Hilfsklinke derart festzulegen, daß die Hilfsklinke unveränderlich an einer vorbestimmten Stelle derjenigen Zahnbrust anliegt, die sie vor sich herschiebt. Die Hilfsklinke wandert somit längs der Zahnbrust ; diese kann dadurch beschädigt werden und am Ende der Vorwärtsbewegung der Hilfsklinke eine Stellung erreichen, die nicht genau der vorgesehenen Zwischenstellung entspricht, wodurch das anschließende Einrasten der Hauptklinke gestört werden kann.

Es ist eine andere Vorschubeinrichtung zum intermittierenden Drehen eines Kreissägeblattes bekannt (DE-C 3 048 738), bei der ein Lenker, welcher um die Achse eines Aufsteckdorns für ein Sägeblatt schwenkbar ist, in einstellbarem Abstand von dieser Achse ein Klinkenlager trägt, an dem eine Vorschubklinke gelagert ist. Eine zweite Vorschubklinke ist nicht vorhanden, sodaß die im vorstehenden beschriebenen Probleme nicht auftreten.

Der Erfindung liegt deshalb die Aufgabe zugrunde, bei einer Vorschubeinrichtung der eingangs beschriebenen Gattung die Gefahr von Störungen der beschriebenen Art zu vermeiden.

Diese Aufgabe ist erfindungsgemäß dadurch gelöst, daß der Anschlag an einem Schlepphebel ausgebildet ist, der um ein mit dem Aufsteckdorn mindestens annähernd koaxiales Schwenklager schwenkbar und mit der Hilfsklinke durch eine Führung verbunden ist, die sich mindestens annähernd in Richtung der Einrastbewegung der Hilfsklinke erstreckt.

Damit wird erreicht, daß die Zusatzklinke während der von ihr bewirkten Vorschubbewegung immer an der gleichen Stelle der Zahnbrust anliegt, unabhängig von der Bewegungsbahn der Hauptklinke. Die Bewegungsbahn der Hauptklinke kann deshalb ohne Rücksicht auf die Hilfsklinke optimiert werden, beispielsweise mit dem Ziel, daß die Hauptklinke die von ihr vorzuschiebende Zahnbrust möglichst stoßfrei erreicht, sie dann rasch beschleunigt und die Bewegung schließlich derart verzögert, daß die betreffende Zahnbrust genau in der Bearbeitungsstellung stehenbleibt und nicht durch Massenträgheitskräfte darüber hinausbewegt wird.

Bei einer zweckmäßigen Ausführungform der Erfindung ist die Führung ein am Schlepphebel ausgebildeter Schlitz, in den ein an der Hilfsklinke befestigter Stift eingreift.

Diese Ausführungsform kann dadurch weitergebildet sein, daß auf dem Stift seitlich neben der Führung eine an dem Zahnrücken des Sägeblattes abwälzbare Rolle gelagert ist.

Es ist ferner zweckmäßig, wenn das Schwenklager einen Lagerzapfen und einen auf diesem gelagerten Lagerring aufweist und der Schlepphebel in Richtung der Führung einstellbar an dem Lagerring befestigt ist.

Diese Ausgestaltung der Erfindung ist vorzugsweise dadurch weitergebildet, daß der Lagerzapfen an einem Lagerkörper ausgebildet ist, der auf den Aufsteckdorn aufsteckbar ist.

Dabei ist es zweckmäßig, wenn der Lagerkörper Haftmagneten zur Festlegung gegenüber dem Sägeblatt aufweist.

Ein Ausführungsbeispiel der Erfindung wird im folgenden anhand schematischer Zeichnungen mit weiteren Einzelheiten erläutert. Es zeigt :

Fig. 1 eine Vorschubeinrichtung für ein Kreissägeblatt in Seitenansicht und teilweise im Schnitt parallel zur Sägeblattebene,

Fig. 2 den Schnitt II-II in Fig. 1 und

Fig. 3 bis 5 Einzelheiten aus Fig. 1 in verschiedenen Betriebsstellungen.

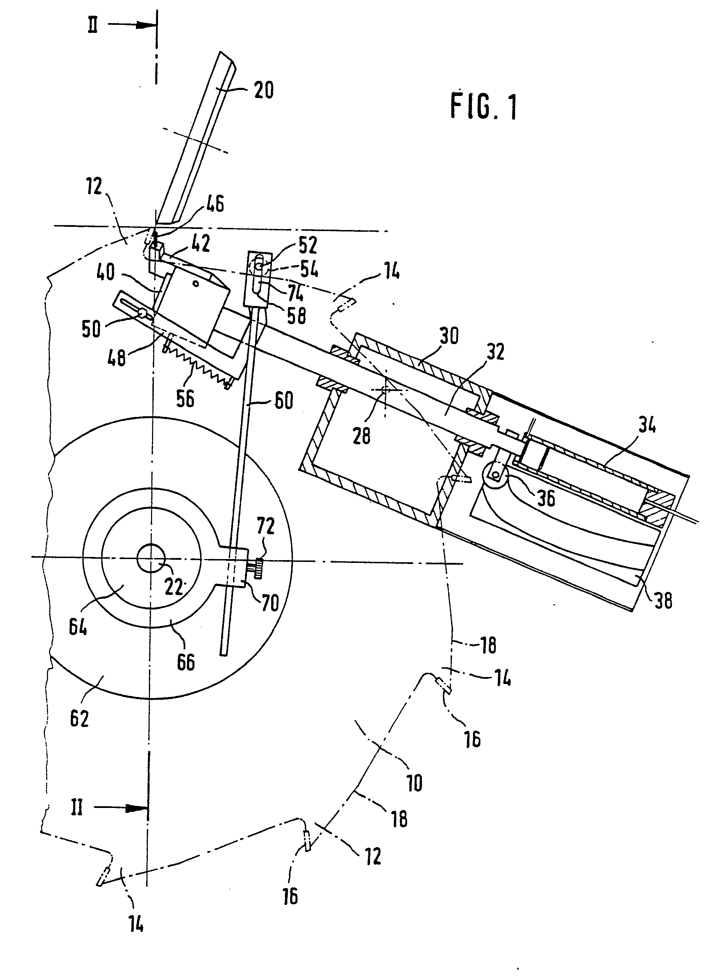

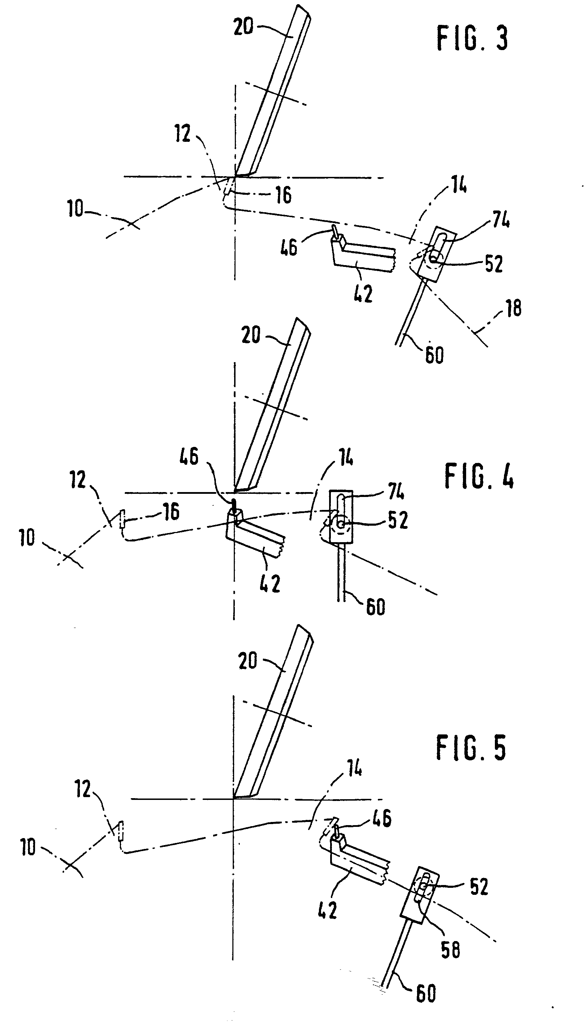

Die dargestellte Vorrichtung hat die Aufgabe, ein Kreissägeblatt 10 mit großer Zahnteilung schrittweise derart vorzuschieben, daß eine von einem Zahn 12 gemäß Fig. 1 und 3 eingenommene Bearbeitungsstellung nach zwei Schritten vom nächstfolgenden Zahn 14 eingenommen wird. Diese Art der Vorschubbewegung hat den Vorteil, daß jeder Schritt der Vorschubeinrichtung nur wenig mehr als halb so groß sein muß, wie die Zahnteilung. Auf jeden Zahn 14 folgt wiederum ein Zahn 12 ; die Zahnteilungen sind im dargestellten Beispiel gleich, ebenso die Zähne 12 und 14, die nur zur Verdeutlichung der Arbeitsweise der Vorschubeinrichtung unterschiedliche Bezugszeichen erhalten haben.

Jeder der Zähne 12 und 14 hat eine Zahnbrust 16. Im dargestellten Beispiel sollen die Zähne 12 und 14 dadurch geschärft werden, daß ihre Zahnbrust 16 mit einer tellerförmigen Schleifscheibe 20 geschliffen wird. Die dargestellte Vorschubeinrichtung ist jedoch auch im Zusammenhang mit anderen Bearbeitungsarten verwendbar.

Das Sägeblatt 10 ist auf einen Aufsteckdorn 22 aufgesteckt, der an einem Schlitten 24 befestigt ist. Der Schlitten 24 ist zur Anpassung an Sägeblätter 10 unterschiedlichen Durchmessers in einer zum Aufsteckdorn 22 radialen Richtung einstellbar. Am Aufsteckdorn 22 bildet ein Bund 26 einen das Aufschieben des Sägeblattes 10 begrenzenden Anschlag ; die genaue axiale Stellung des Sägeblattes 10 während jedes Schleifarbeitsganges ist durch nicht dargestellte Klemmbacken üblicher Bauart festgelegt, die das Sägeblatt immer dann zwischen sich einspannen, wenn ein Zahn 12 oder 14 die in Fig. 1 und 3 dargestellte Bearbeitungsstellung einnimmt.

Die Vorschubeinrichtung hat eine zum Aufsteckdorn 22 in einem Abstand parallele Achse 28, um die ein Gehäuse 30 schwenkbar ist. Im Gehäuse 30 ist eine Kolbenstange 32 verschiebbar geführt, deren geometrische Achse die Achse 28 unter einem rechten Winkel schneidet. Die Kolbenstange 32 gehört zu einer doppeltwirkenden Kolbenzylindereinheit 34 und ist über eine nicht dargestellte parallele Stange mit einer Kurvenfolgerolle 36 verbunden, die an einer ortsfesten Kurve 38 geführt ist. Die Kurve 38 ist zur Anpassung an unterschiedlich große Sägeblätter auswechselbar.

An einem Ende der Kolbenstange 32 ist ein Klinkenträger 40 befestigt, an dem eine Hauptklinke 42 um eine Hauptklinkenachse 44 schwenkbar gelagert ist. Die Hauptklinke 42 trägt einen Stift 46, der an die Zahnbrust 16 eines Zahns 12 oder 14 anlegbar ist, um diesen vorzuschieben. Eine nicht dargestellte Feder spannt die Hauptklinke 42 in Richtung zum Sägeblatt 10 vor.

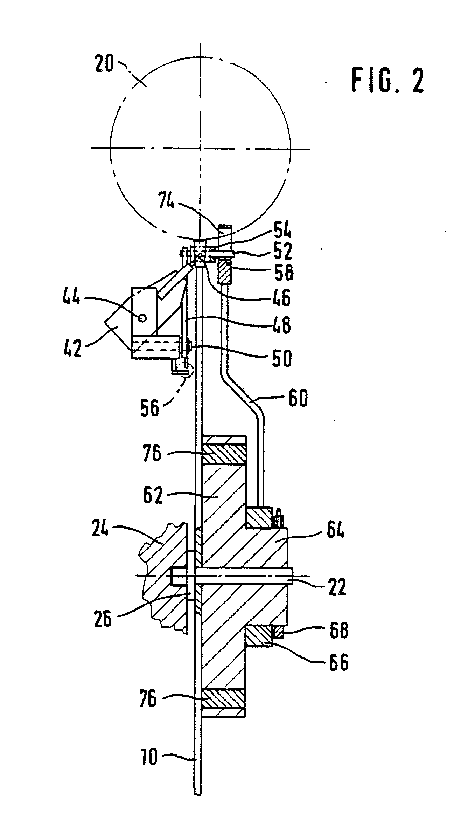

Am Klinkenträger 40 ist ferner eine Hilfsklinke 48 um eine zum Aufsteckdorn 22 parallele Hilfsklinkenachse 50 schwenkbar gelagert. Die Hilfsklinke 48 hat ebenfalls einen Stift 52 ; dieser berührt jedoch das Sägeblatt 10 nicht unmittelbar, sondern über eine auf ihm gelagerte Rolle 54, die bei jedem in Fig. 1 bis 5 nach rechts gerichteten Rückhub der Kolbenzylindereinheit 34 am Zahnrücken 18 eines Zahnes 12 oder 14 abwälzbar und anschließend hinter der Zahnbrust 16 des selben Zahnes einrastbar ist.

Das Einrasten der Hilfsklinke 48 kann durch Schwerkraft geschehen, wird aber im dargestellten Beispiel durch eine Feder 56 unterstützt, die zwischen dem Klinkenträger 40 und der Hilfsklinke 48 eingespannt ist und auf diese ein Drehmoment ausübt, das gemäß Fig. 1 und 3 bis 5 dem Uhrzeigersinn entgegengesetzt ist. Die Einrastbewegung der Hilfsklinke 48 ist durch einen An-schlag 58 begrenzt, der an einem Schlepphebel 60 ausgebildet ist.

Der Schlepphebel 60 ist um den Aufsteckdorn 22 hin- und herschwenkbar. Zu diesem Zweck ist auf den Aufsteckdorn 22 zusätzlich zum Sägeblatt 10 ein Lagerkörper 62 aufgesteckt, an dem ein mit dem Aufsteckdorn 22 und also auch mit dem Sägeblatt 10 gleichachsiger Lagerzapfen 64 ausgebildet ist. Auf dem Lagerzapfen 64 ist ein Lagerring 66 gelagert und durch einen Sicherungsring 68 axial festgelegt. Am Lagerring 66 ist ein Klemmkörper 70 ausgebildet, in dem der Schlepphebel 60 längseinstellbar geführt und mit einer Klemmschraube 72 festklemmbar ist. Der Schlepphebel 60 weist eine Führung 74 in Gestalt eines Schlitzes oder Langlochs auf, dessen in den Zeichnungen unteres, in Bezug auf den Aufsteckdorn 22 radial inneres Ende den Anschlag 58 für den in die Führung 74 eingreifenden Stift 52 bildet.

Der Lagerkörper 62 ist durch in ihn eingebaute Haftmagneten 76 am Sägeblatt 10 festgehalten und wird in üblicher Weise zum Erfassen des Sägeblattes verwendet, wenn dieses auf den Aufsteckdorn 22 aufgesteckt oder von ihm abgezogen werden soll. Lagerring 66 und Schlepphebel 60 lassen sich nach Lösen des Sicherungsrings 68 leicht entfernen, wenn ein Sägeblatt bearbeitet werden soll, dessen Zahnteilung kleiner ist als der zur Verfügung stehende Hub der Kolbenzylindereinheit 34. In diesem Fall wird auch die Hilfsklinke 48 abgebaut.

Wenn jedoch die Zahnteilung des Sägeblattes 10, wie dargestellt, größer ist als der größtmögliche Hub der Kolbenzylindereinheit 34, arbeitet die Vorrichtung folgendermaßen :

Es sei angenommen, die Kolbenzylindereinheit 34 und somit auch der Klinkenträger 40 habe gemäß Fig. 1 einen Vorwärtshub beendet, bei dem die Hauptklinke 42 einen Zahn 12 in seine Bearbeitungsstellung gebracht hat. Das Sägeblatt 10 wird nun festgeklemmt und der Zahn 12 wird an seiner Zahnbrust 16 bearbeitet, während die Kolbenzylindereinheit 34 einen Rückwärtshub ausführt. Bei diesem Rückwärtshub wälzt sich die Rolle 54 am Zahnrücken 18 des nächstfolgenden Zahnes 14 ab und rastet schließlich hinter dessen Zahnbrust 16 ein, wie in Fig. 3 dargestellt. Die Endstellung der Einrastbewegung ist durch den Anschlag 58 festgelegt.

Beim nächsten Vorwärtshub schiebt die Rolle 54 der Hilfsklinke 48 den Zahn 14 gemäß Fig. 4 in eine Zwischenstellung ; die Hauptklinke 42 ist währenddessen unwirksam und rastet erst am Ende des nächsten Rückhubes gemäß Fig. 5 hinter dem Zahn 14 ein, der dann beim nächsten Vorwärtshub von der Hauptklinke 42 aus der Zwischenstellung gemäß Fig. 5 in die Bearbeitungsstellung gemäß Fig. 1 geschoben wird.

## Patentansprüche

1. Vorschubeinrichtung zum intermittierenden Drehen eines Kreissägeblattes (10) großer Zahnteilung mit
- einem Aufsteckdorn (22) für das Sägeblatt (10),
- einer Hauptklinke (42), die hubweise vor- und zurückbewegbar und dazu ausgebildet ist, bei jedem zweiten Vorwärtshub die Zahnbrust (16) eines Zahnes (12 ; 14) des Sägeblattes (10) in eine Bearbeitungsstellung zu schieben,
- einer Hilfsklinke (48), die hinter der Hauptklinke (42) angeordnet, gemeinsam mit ihr vor- und zurückbewegbar und dazu ausgebildet ist, bei jedem auf das Instellungbringen eines Zahnes (12 ; 14) folgenden Rückhub hinter der Zahnbrust (16) des nächsten Zahnes (14 ; 12) einzurasten und sie beim nächstfolgenden Vorwärtshub in eine Zwischenstellung zu bringen, in der die Hauptklinke (42) beim darauffolgenden Rückhub hinter dieser Zahnbrust (16) einrasten kann, und
- einem Anschlag (58), der die Einrastbewegung der Hilfsklinke (48) begrenzt,
dadurch gekennzeichnet, daß der Anschlag (58) an einem Schlepphebel (60) ausgebildet ist, der um ein mit dem Aufsteckdorn (22) mindestens annähernd koaxiales Schwenklager (62, 64) schwenkbar und mit der Hilfsklinke (48) durch eine Führung (74) verbunden ist, die sich mindestens annähernd in Richtung der Einrastbewegung der Hilfsklinke (48) erstreckt.

2. Vorschubeinrichtung nach Anspruch 1, dadurch gekennzeichnet, daß die Führung (74) ein am Schlepphebel (60) ausbildeter Schlitz ist, in den ein an der Hilfsklinke (48) befestigter Stift (52) eingreift.

3. Vorschubeinrichtung nach Anspruch 2, dadurch gekennzeichnet, daß auf dem Stift (52) seitlich neben der Führung (74) eine an den Zahnrücken (18) des Sägeblattes (10) abwälzbare Rolle (54) gelagert ist.

4. Vorschubeinrichtung nach einem der Ansprüche 1 bis 3, dadurch gekennzeichnet, daß das Schwenklager (64, 66) einen Lagerzapfen (64) und einen auf diesem gelagertem Lagerring (66) aufweist und der Schlepphebel (60) in Richtung der Führung (74) einstellbar an dem Lagerring (66) befestigt ist.

5. Vorschubeinrichtung nach Anspruch 4, dadurch gekennzeichnet, daß der Lagerzapfen (64) an einem Lagerkörper (62) ausgebildet ist, der auf den Aufsteckdorn (22) aufsteckbar ist.

6. Vorschubeinrichtung nach Anspruch 5, dadurch gekennzeichnet, daß der Lagerkörper (62) Haftmagenten (76) zur Festlegung gegenüber dem Sägeblatt (10) aufweist.

## Claims

1. A feeding means for intermittently rotating a circular saw blade (10) of great pitch, comprising
- a slip-on arbor (22) for the saw blade (10),
- a principal pawl (42) designed for strokewise reciprocating motion and such as to push the tooth face (16) of a tooth (12 ; 14) of the saw blade (10) upon every other forward stroke into a working position,
- a secondary pawl (48) disposed behind the principal pawl (42) and designed to reciprocate together with the principal pawl and such as to engage behind the tooth face (16) of the next tooth (14 ; 12) upon each return stroke following the positioning of a tooth (12 ; 14) and to move said tooth face during the next successive forward stroke into an intermediate position at which the principal pawl (42) may engage behind this tooth face (16) during the subsequent return stroke, and
- a stop (58) which limits the catching movement of the secondary pawl (48),
characterized in that the stop (58) is formed at a drag lever (60) which is pivotable about a pivot bearing (62, 64), at least approximately coaxial with the slip-on arbor (22), and connected to the secondary pawl (48) by a guide means (74) extending at least approximately in the direction of the catching movement of the secondary pawl (48).

2. The feeding means as claimed in claim 1, characterized in that the guide means (74) is a slot formed at the drag lever (60) and engaged by a pin (52) which is fixed to the secondary pawl (48).

3. The feeding means as claimed in claim 2, characterized in that a roller (54) adapted to ride along the tooth backs (18) of the saw blade (10) is supported on the pin (52) next to the guide means (74).

4. The feeding means as claimed in one of claims 1 to 3, characterized in that the pivot bearing (64, 66) comprises a pivot pin (64) and a bearing ring (66) supported on the pivot pin and the drag lever (60) is secured to the bearing ring (66) for adjustment in the direction of the guide means (74).

5. The feeding means as claimed in claim 4, characterized in that the pivot pin (64) is formed at a bearing body (62) adapted to be mounted on the slip-on arbor (22).

6. The feeding means as claimed in claim 5, characterized in that the bearing body (62) comprises holding magnets (76) for positioning with respect to the saw blade (10).

## Revendications

1. Dispositif d'avance pour faire tourner de façon intermittente une lame de scie circulaire (10) à grand pas de denture, comprenant :
- un mandrin de montage (22) pour la lame de scie (10),
- un cliquet principal (42) qui peut avancer et reculer par courses successives et qui est constitué de manière à pousser le flanc avant (16) d'une dent (12 ; 14) de la lame de scie (10) pour la placer dans une position de travail dans une sur deux de ses courses d'avance,
- un cliquet auxiliaire (48) qui est placé en arrière du cliquet principal (42), qui peut avancer et reculer conjointement avec celui-ci et qui est constitué de manière qu'à chaque course de recul qui suit la mise en position d'une dent (12 ;

14), il s'engage derrière le flanc avant (16) de la dent suivante (14 ; 12) et que, lors de la course d'avance suivante, il se place dans une position intermédiaire, dans laquelle le cliquet principal pourra s'engager derrière ce flanc avant (16) lors de la course de recul suivante, et

- une butée (58) qui limite le mouvement d'engagement du cliquet auxiliaire (48), caractérisé en ce que la butée (58) est formée sur un levier traîné (60), qui peut osciller autour d'un palier d'oscillation (62, 64) au moins approximativement coaxial au mandrin de montage (22), et est relié au cliquet auxiliaire (48) par un guide (74) qui s'étend au moins approximativement parallèlement au mouvement d'engagement du cliquet auxiliaire (48).

2. Dispositif d'avance selon la revendication 1, caractérisé en ce que le guide (74) est une fente formée sur le levier traîné (60), et dans laquelle est engagé un doigt (52) fixé au cliquet auxiliaire (48).

3. Dispositif d'avance selon la revendication 2, caractérisé en ce qu'un galet (54) qui peut rouler sur le dos (18) des dents de la lame de scie (10) tourillonne sur le doigt (52), latéralement à côté du guide (74).

4. Dispositif d'avance selon l'une des revendications 1 à 3, caractérisé en ce que le palier d'oscillation (64, 66) comprend un tourillon de palier (64) et une bague de palier (66) qui tourillonne sur celui-ci, et en ce que le levier traîné (60) est fixé sur la bague de palier (66) de manière à pouvoir être réglé par déplacement dans une direction parallèle au guide (74).

5. Dispositif d'avance selon la revendication 4, caractérisé en ce que le tourillon de palier (64) est formé sur un corps de palier (62) qui peut être emmanché sur le mandrin de montage (22).

6. Dispositif d'avance selon la revendication 5, caractérisé en ce que le corps de palier (62) porte des aimants de fixation par adhérence (76) destinés à le fixer contre la lame de scie (10).

FIG. 1

FIG. 2

FIG. 3

20
12
10
16
14
46
74
52
42
18
60

FIG. 4

20
46
14
12
74
16
52
10
42
60

FIG. 5

20
12
14
10
46
42
52
58
60

3